# EUROPEAN PATENT SPECIFICATION

(11) **EP 1 817 157 B1**
(45) Date of publication and mention of the grant of the patent: **02.10.2013**
(21) Application number: 05792254.4
(22) Date of filing: 11.10.2005
(51) Int. Cl.: B29D 30/14, B29D 30/28, B29D 30/60, B29C 47/04, B29C 47/06

(54) **METHOD AND APPARATUS FOR MANUFACTURING A TYRE FOR VEHICLE WHEELS**
VERFAHREN UND VORRICHTUNG ZUR HERSTELLUNG EINES REIFENS FÜR FAHRZEUGRÄDER
PROCEDE ET APPAREIL DE FABRICATION UN PNEUMATIQUE POUR ROUES DE VÉHICULES

(30) Priority: 27.10.2004 WO PCT/IT2004/000592; 07.12.2004 WO PCT/IT2004/000680
(43) Date of publication of application: 15.08.2007
(73) Proprietor: Pirelli Tyre S.p.A., 20126 Milano (IT)
(72) Inventor: LO PRESTI, Gaetano Pirelli Tyre S.p.A., I-20126 Milano (IT); NOTO, Rodolfo Pirelli Tyre S.p.A., I-20126 Milano (IT); POZZATI, Giovanni, Viale Sarca 222, I-20126 Milano (IT)
(74) Representative: Tansini, Elio Fabrizio
(86) International application number: PCT/IB2005/053345
(87) International publication number: WO 2006/046162

(56) References cited:
- EP-A- 0 868 991
- EP-A- 0 970 797
- WO-A-03/101712
- US-A- 4 556 376
- US-A- 5 527 499

## Description

The present invention relates to a method of manufacturing a tyre for vehicle wheels according to the preamble of claim 1.

The invention also relates to an apparatus for manufacturing tyres for vehicle wheels according to the preamble of claim 29.

A method and an apparatus of this kind is known from e.g. EP-A-0 868 991.

During the present description the invention will be set out making specific reference to the manufacture of tyres for vehicle wheels. This does not exclude the possibility of manufacturing other different articles such as vulcanisation bladders used in tyre manufacturing processes, expandable bags used in tyre manufacturing apparatus, or still others.

A tyre for vehicle wheels generally comprises a carcass structure including at least one carcass ply made up of reinforcing cords incorporated in an elastomer matrix. The carcass ply has end flaps respectively engaged with annular reinforcing structures located in the regions usually identified as "beads" and each normally formed of a substantially circumferential annular insert onto which at least one filling insert is applied, at a radially external position.

Associated with the carcass ply at a radially external position is a belt structure comprising one or more belt layers disposed in radial superposed relationship with each other and having textile or metallic reinforcing cords with a crossed orientation and/or substantially parallel to the circumferential extension direction of the tyre. A tread band also made of elastomer material as other structural elements constituting the tyre, is applied to the belt structure, at a radially external position.

A so-called "under-layer" can be interposed between the tread band and the belt structure, said under-layer being made of elastomeric material having properties adapted to ensure a steady union of the tread band.

It is to be pointed out that to the aims of the present description with the term "elastomeric material" it is intended a composition comprising at least one elastomeric polymer and at least one reinforcing filler. Preferably, this composition further comprises additives such as a cross-linking agent and/or a plasticizer. Due to the presence of the cross-linking agent, this material can be cross-linked through heating so as to form the final article.

Respective sidewalls of elastomeric material are also applied to the side surfaces of the carcass structure, each extending from one of the side edges of the tread band until close to the respective annular anchoring structure to the beads.

In tyres of the tubeless type the carcass ply is fully coated with a layer of a preferably butyl-based elastomeric material usually referred to as "liner" having optimal airtightness features and extending from one of the beads to the other.

In tyres of the run flat type or for other particular uses, the carcass structure can further be provided with auxiliary support inserts of elastomeric material, located at an axially internal position to each of the sidewalls. These auxiliary support inserts usually called "sidewall inserts", lend themselves to support the loads transmitted to the wheel in case of accidental deflation of the tyre, to enable the vehicle to go on running under safety conditions.

In many known processes for manufacturing a tyre the carcass structure and belt structure, as well as the tread band, sidewalls and any other structural element of elastomeric material, are made separately from each other in respective work stations, and then stowed in storage stations or magazines from which they are subsequently picked up for mutual-assembly purposes along a tyre manufacturing line.

Also recently developed have been production processes in which, as described in WO 01/36185 in the name of the same Applicant for example, the structural elements of the tyre are built on a suitably shaped forming support, by sequentially laying on the latter, a plurality of elementary components consisting of single rubberised cords or cords grouped together in parallel side by side relationship to form narrow strips for example, that are particularly used in the manufacture of the carcass and belt structures, and of continuous elongated elements of elastomeric material, particularly used for manufacturing other structural elements of the tyre such as tread band, sidewalls, liner, fillers, auxiliary support inserts. More specifically, a robotized arm bears a toroidal support on which each of the structural elements of a tyre under production is directly made. The robotized arm gives the toroidal support a circumferential-distribution motion around the geometric axis thereof, simultaneously with controlled displacements of transverse distribution in front of a delivery member supplying a continuous elongated element of elastomeric material. The continuous elongated element therefore forms a plurality of coils the orientation and mutual-superposition parameters of which are treated so as to control the thickness variations to be given to a structural element of a tyre being manufactured, based on a predetermined laying-down scheme pre-set in an electronic computer.

GB 1,048,241 teaches how to directly wind up on a tyre being manufactured, a continuous elongated element directly coming from an extruder so as to form coils disposed in axial side by side and/or radial superposition relationship in order to obtain the tread band. The tread band is directly made on the carcass sleeve of a cylindrical shape disposed on the building drum before the sleeve itself is shaped into a toroidal conformation.

In document WO 2004-041522, also in the name of the same Applicant, the carcass structure and belt structure of a tyre being manufactured are made through assembling of semi-finished structural elements on a building drum and an auxiliary drum respectively, while some other structural elements of elastomeric material, in particular the tread band, under-layer and/or sidewalls, are made through spiralling of a continuous elongated element produced by an extruder, directly onto the carcass and/or belt structures.

According to EP 0868991, herein referred as representing the closest prior art reference, a tread band is manufactured by conveying a primary elastomer material through an extrusion path defined by a preforming channel followed by an extrusion outlet formed in a die. An auxiliary channel opens at right angles into the extrusion path, close to the extrusion outlet. An auxiliary elastomer material conveyed to the auxiliary feeding channel is homogeneously distributed by a coating effect under the lower surface of the tread band crossing the extrusion outlet. The extruded product, initially made in the form of a continuous strip of infinite length, is intended for being usually cut into stretches of predetermined length, each of which lends itself to be applied crownwise to a tyre during the manufacturing step.

Similarly US 4,556,376 provides an extruder head for producing flat cohesive profiled strips from resilient mixtures of differing composition especially for manufacturing uncured tread strips for pneumatic tires. Two extruders feed a common extrusion nozzle via a preform die having flow channel which extend one above the other. A third extruder conveys the mixture for the edge portions to the preform die.

EP 0970797 teaches feeding a band-shaped uncured first rubber material which is helically wound onto a rotating support, so as to form a first layer of said first uncured rubber material. Then, a band-shaped uncured second rubber material is helically wound onto the rotating support, so as to form a second layer radially superimposed on the first layer.

According to WO 03/101712, a continuous elongated element fed from a delivery member is applied onto a rotating toroidal support. The toroidal support is moved on a plurality of axes so as to carry out controlled relative displacements for transverse distribution between said toroidal support and the delivery member, to form a component of a tyre with said elongated element which is defined by a plurality of coils laid down in mutual side by side and superposed relationship in a pre-established deposition pattern depending on a predetermined cross-section outline to be given to said component.

US 5,527,499 teaches provision of an extrusion head having plural flow channels extending to an extrusion die and at least two extruders for feeding respective components into the flow channels for passage to the extrusion die. The extrusion die has a common die outlet from which the components are discharged to form the composite profile strip, and respective flow restriction devices are disposed in the flow channels between the extruders and the extrusion die.

The Applicant has encountered difficulties in obtaining under-layers or other structural elements of limited thickness through spiralling of a continuous elongated element directly coming from an extruder. Actually, to enable the continuous elongated element to have a sufficient structural consistency for subsequent handling and to be extruded with the necessary regularity, the thickness of said element is required not to be under given values. Extrusion of a continuous elongated element of a small thickness in addition would impose important restrictions to the exit speed of the element itself from the extrusion die, with possible productivity drops.

The Applicant has also perceived that if the under-layer and tread band are made in two distinct work stations by means of said continuous elongated element, it is not possible to fully exploit the production capacities of the installation designed for tyre manufacture.

In spite of the above listed problems relating to said restrictions in the exit speed of the continuous elongated element from the extrusion die, the Applicant has however ascertained that manufacture of the under-layer is tendentially completed in greatly shorter times than those required for manufacturing the tread band having a much greater thickness than that of the under-layer. Consequently, the work station dedicated to manufacture of the under-layer is necessarily submitted to important stand-by times between working of two tyres in succession, to enable the work station dedicated to manufacture of the tread band to complete working.

In accordance with the present invention, the Applicant has perceived that if the material designed to form the under-layer (or other relatively thin structural element) is coupled with at least part of the material designed to form the tread band (or other structural element to be manufactured adjacent to the thin element) before carrying out spiralling, a continuous elongated element of a suitable structural consistency can be obtained which is adapted to, for example, give a very thin under-layer simultaneously with part of the tread band.

The Applicant has therefore found that by preparing a continuous elongated element through co-extrusion of a first and a second elastomeric materials, and spiralling said element so as to obtain a layered component on the forming support, the productivity can also be increased in the manufacture of very thin structural elements and, in case of need, a better distribution can be obtained as regards the working time required from different work stations co-operating in producing the tyre.

In the present specification and in the following claims, by "layered component" it is intended a structural tyre element or a portion thereof.

Within the present definition, by "structural element" of the tyre it is intended any part made of elastomeric material such as the tread band, sidewalls, auxiliary support inserts, fillers, liner and/or under-liner, or a portion thereof, or also the assembly formed of two or more of said parts or portions.

In the present specification and in the following claims, by "layered element" it is intended an article of manufacture different from a tyre or from a structural element thereof, such as a vulcanisation bladder, an expandable bag and the like, or a portion of same.

According to the invention there is provided a method of manufacturing a tyre for vehicle wheels, as defined in claim 1.

In accordance with a further aspect of the invention there is provided an apparatus for manufacturing tyres of vehicle wheels as defined in claim 29.

Particular embodiments of the invention are the subject of the respective dependent claims.

Further features and advantages will become more apparent from the detailed description of a preferred but not exclusive example of a method and an apparatus for manufacturing tyres for vehicle wheels or other articles of elastomeric material, in accordance with the present invention.

This description will be set out hereinafter with reference to the accompanying drawings, given by way of non-limiting example, in which:
- Fig. 1 is a diagrammatic top view of an apparatus for manufacturing tyres in accordance with the present invention;
- Fig. 2 is an elevation view of a portion of the apparatus shown in Fig. 1;
- Fig. 3 shows a detail of an extrusion die, sectioned along a diametral plane identified with III-III in Figs. 6 and 7;
- Fig. 4 is a fragmentary perspective view in a cross section plane of a continuous elongated element emerging from the extrusion die;
- Fig. 5 is a fragmentary perspective view in a cross section plane of a further example of a continuous elongated element obtainable in accordance with the invention;
- Fig. 6 shows a section taken along line VI-VI in Fig. 3, during extrusion of a continuous elongated element as seen in Fig. 4;
- Fig. 7 shows a section taken along line VII-VII in Fig. 3, during extrusion of a continuous elongated element as seen in Fig. 5;
- Fig. 8 is a laying-down scheme given by way of example, of the continuous elongated element seen in Fig. 4, in the form of coils disposed close to each other, in order to obtain a layered component;
- Fig. 9 is a fragmentary diagrammatic cross-section view of a tyre obtainable in accordance with the present invention.

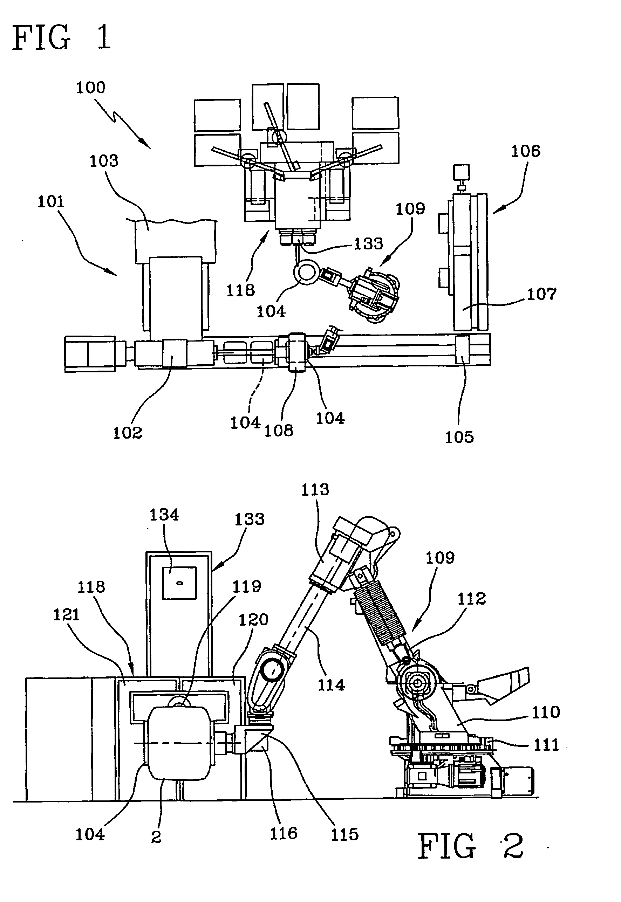

Referring particularly to Figs. 1 and 2, an apparatus for manufacturing tyres for vehicle wheels designed to put into practice a manufacturing method in accordance with the present invention has been generally identified with reference numeral 100.

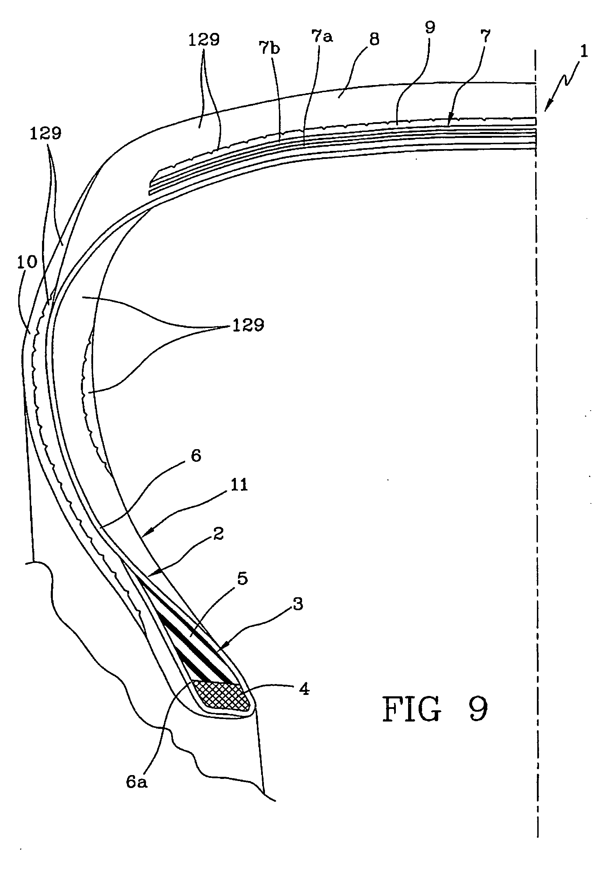

In the embodiment shown, apparatus 100 is set for manufacturing tyres of the type shown by way of example in Fig. 9 and generally denoted at 1. Tyre 1 essentially comprises a carcass structure 2 of substantially toroidal conformation comprising cords or other elongated reinforcing elements incorporated in an elastomer matrix, and structural elements of elastomeric material 5, 8, 9, 10, 11 associated with the carcass structure 2, as better described in the following.

In more detail, the carcass structure 2 may for example comprises a pair of annular anchoring structures 3 integrated into the regions usually identified as "beads", each consisting of at least one substantially circumferential annular insert 4, usually called "bead core", formed of one or more rubberised cords or equivalent elongated reinforcing elements incorporated in an elastomer matrix. An elastomeric filling 5 can be applied to the bead ring 4 at a radially external position. In engagement with each of the annular anchoring structures 3 are the end flaps 6a of at least one carcass ply 6 comprising textile or metallic rubberised cords, or equivalent elongated reinforcing elements incorporated in an elastomer matrix and extending transversely of the circumferential extension of tyre 2, possibly with a predetermined inclination, from one of the annular anchoring structures 3 to the other.

In tyres of the tubeless type, i.e. without an air tube, the carcass structure 2 at a radially internal position is provided with a layer of a substantially airtight elastomeric material generally referred to as "liner" and not shown.

Usually associated with the carcass structure 2 is also one or more belt layers 7a, 7b comprising metallic or textile rubberised cords or equivalent elongated reinforcing elements incorporated in an elastomer matrix, suitably inclined relative to the circumferential extension of the tyre according to preferably crossed orientations between one belt layer and the other, as well as a possible outer belting layer (not shown) comprising one or more cords circumferentially wound into coils disposed axially in side by side relationship around the belt layers 7a, 7b. The assembly consisting of the belt layers 7a, 7b and the possible outer belting layer defines a so-called belt structure generally denoted at 7, of a substantially cylindrical annular conformation, applied at a radially external position around the carcass structure 2. To the aims of the present specification and the following claims, the belt structure 7, while described as a distinct component, is considered (when not otherwise expressly stated) to be an integral part of the carcass structure 2.

Further associated with the carcass structure 2 is a tread band 8 circumferentially applied to the belt structure 7 at a radially external position, after possible interposition of a so-called "under-layer" 9 formed of a thin layer of elastomeric material having suitable composition and physico-chemical features and acting as an interface between the true tread band and the underlying belt structure 7. A pair of sidewalls 10 is laterally applied to the carcass structure 2 at respectively opposite sides.

In run flat tyres or tyres intended for particular uses, auxiliary support inserts 11 may be also provided, of the type usually referred to as "sidewall inserts" for example, that are applied to the region close to the sidewalls 10 internally of the carcass ply 6, as shown by way of example in Fig. 1, or between two paired carcass plies or also at a position radially external to the carcass structure 2.

Tyre 1 lends itself to be obtained using a manufacturing apparatus 100 essentially comprising devices designed to form the carcass structure 2 and devices for carrying out association of the carcass structure 2 with the tread band 8, sidewalls 10, possible auxiliary support inserts 11, said liner and/or other structural elements of elastomeric material co-operating in forming tyre 1.

The individual components of the carcass structure 2 and the belt structure 7 such as in particular the annular anchoring structures 3, carcass ply or plies 6, belt layers 7a, 7b and further possible reinforcements designed to constitute the outer belting layer, can be supplied to apparatus 100 in the form of semi-finished products, made in preceding working steps, to be suitably assembled with each other.

In this case, the devices for making the carcass structure 2 can usually comprise a manufacturing line 101, not described in detail as obtainable in any convenient manner, having a building drum 102 on which the carcass ply or plies 6 coming from a feeding unit 103 are first wound up so as to form a so-called "carcass sleeve" that is substantially cylindrical. Fitted on the end flaps 6a of the carcass ply/plies 6 are the annular anchoring structures 3, so that afterwards turning up of the end flaps themselves is carried out to cause engagement of the anchoring structures in the loops thus formed by the turned-up ply/plies 6. If required, the manufacturing line 101 may comprise devices for associating auxiliary support inserts with the carcass ply or plies 6, which auxiliary inserts are applied during preliminary steps or steps alternated with the steps of laying the ply or plies 6 and/or other components of the carcass structure 2. In particular, application of said auxiliary support inserts 11 or "sidewall inserts" can be provided directly on the building drum 102 before application of the carcass ply or plies 6, or on one of the carcass plies before application of an additional carcass ply 6.

When assembling of the components has been completed, transfer devices not shown pick up the carcass structure 2 from the building drum 102 to transfer it onto a primary drum 104, of the type usually referred to as "shaping drum" for example, to produce the tyre following a manufacturing process of the so-called "two-stage" type.

Alternatively, assembling of the components of the carcass structure 2 can be directly carried out on the primary drum 104, to produce the tyre following a manufacturing process of the so-called "unistage" type.

Simultaneously with assembling of the carcass structure 2 on the building drum 102 or directly on the primary drum 104, the belt structure 7 is made on an auxiliary drum 105. More particularly, to this aim the auxiliary drum 105 is provided to interact with devices 106 for application of the belt structure 7 that can for example comprise at least one feeding unit 107 along which semifinished products in the form of a continuous strip are moved forward, to be then cut into sections of a length corresponding to the extension of the auxiliary drum 105, concurrently with formation of the corresponding belt layers 7a, 7b thereon. Combined with the unit for feeding the belt layers 107 can be a feeding unit for supplying one or more additional reinforcing inserts such as continuous cords (not shown in the drawings) to be applied to the belt layers 7a, 7b so as to form the outer belting layer in the form of axially contiguous circumferential coils.

Upon the action of suitable transfer devices 108, the belt structure 7 disposed on the auxiliary drum 105 lends itself to be picked up from the latter and transferred onto the carcass structure 2 shaped as a cylindrical sleeve and disposed on the primary drum 104. The transfer devices 108 may comprise a transfer member of substantially annular conformation that is moved until it is disposed around the auxiliary drum 105 to pick up the belt structure 7 therefrom. In a manner known by itself, the auxiliary drum 105 releases the belt structure 7 that is then moved by the transfer member 108 to be placed to a radially external position relative to the primary drum 104 carrying the carcass structure 2 and coaxially centred thereon.

The primary drum 104 can be provided to be picked up from the manufacturing line 101 and transferred to a position suitable for interaction with the transfer member 108 by a suitable laying-down member such as a robotized arm 109. The robotized arm 109 preferably comprises a base 110 rotatable on a fixed platform 111 around a first vertical axis, a first section 112 linked to base 110 in an oscillating manner around a second preferably horizontal axis, a second section 113 linked to the first section 112 in an oscillating manner along a third axis, also preferably horizontal, and a third section 114 rotatably supported by the second section 113 along an axis orthogonal to the third oscillation axis. Linked to the end of the third section 114 of the robotized arm 109 with possibility of oscillation around a fifth and a sixth oscillation axes orthogonal to each other, is a head 115 carrying a motor 116 for rotational driving of the primary drum 104, susceptible of engagement with the head itself in cantilevered fashion.

The robotized arm 109 therefore is adapted to support and control movement of the primary drum 104 or other forming support during the whole production cycle, conveniently positioning it for interaction with the manufacturing line 101 and, subsequently, with the transfer member 108 for the belt structure 7.

The carcass structure 2 coaxially positioned within the belt structure 7 retained by the transfer member 108 is shaped in a toroidal configuration through mutual axial approaching of the annular anchoring structures 3 and simultaneous admission of fluid under pressure into said carcass structure until the carcass ply or plies 6 are brought into contact with the inner surface of the belt structure 7.

Alternatively, the primary drum 104 can consist of a rigid forming support conforming in shape to the inner surface of tyre 1 under production. In this case, manufacture of the carcass structure 2 and the respective belt structure 7 can be directly carried out on the primary drum 104 while the latter is sequentially brought, through the robotized arm 109 or other suitable devices, to interact with one or more work stations located along the manufacturing line 101, to directly form the carcass ply 6, annular anchoring structures 3, belt layers 7a, 7b and/or other constituent elements of tyre 1 through laying of elementary components such as narrow strips of rubberised cords, and/or continuous elongated elements of elastomeric material, as described for example in document US 6,457,504 in the name of the same Applicant.

The structural elements of elastomeric material of tyre 1, such as the tread band 8, under-layer 9, sidewalls 10, auxiliary support inserts 11, said liner, or at least one of them, can be in turn made by winding at least one continuous elongated element 117 of elastomeric material into contiguous circumferential coils, around a forming support that, in the embodiment shown, is represented by the carcass structure 2 in engagement with the primary drum 104 and carrying the respective belt structure 7.

Alternatively, the forming support can consist of the primary drum 104 itself. Said primary drum can be made in the form of a rigid drum conforming in shape to the inner surface extension of tyre 1.

In more detail, the sidewalls 10 can be made directly against the side surfaces of the carcass ply 6. The tread band 8 can be in turn manufactured at a radially external position to the carcass structure 2 and more specifically on the belt structure 7, before or after assembling of the belt structure to the carcass structure 2. Other structural elements such as the liner, possible auxiliary support inserts 11 and/or other structural elements disposed at the inner surfaces of tyre 1, or to be applied to the carcass structure 2 at a second time, can be directly made on the primary drum 104 or other forming support in the form of a rigid drum.

In a preferential embodiment the devices set to associate the structural elements of elastomeric material 8, 9, 10, 11 with the carcass structure 2 comprise at least one unit for manufacturing layered components 118 that, in the embodiment shown, is specifically dedicated to the manufacture of the tread band 8 and the related under-layer 9.

The unit for manufacturing layered components 118 comprises at least one extrusion die 119 communicating with a first extruder 120 and a second extruder 121 or other suitable feeding devices, set to send a first and a second elastomeric materials having different compositions from each other to the extrusion die itself. In the embodiment described, the first elastomeric material is designed and formulated for manufacturing the under-layer 9, whereas the second elastomeric material has a formulation suitable for manufacturing the tread band 8.

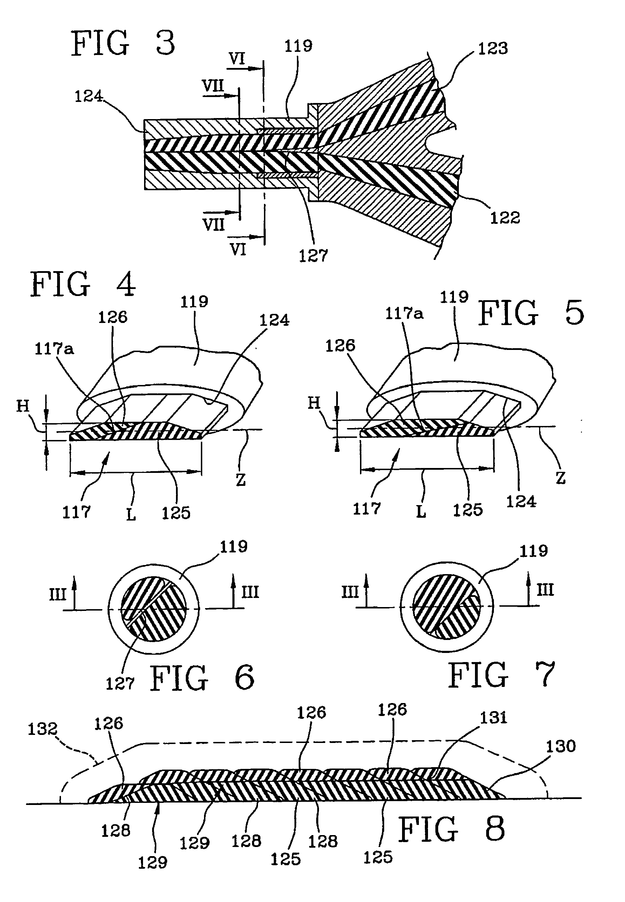

As better shown in Fig. 3, die 119 communicates with the first and second extruders 120, 121 through a first and a second inlet channels 122, 123 respectively, that convey the first and second elastomeric materials towards an outflow port 124 arranged in the die itself. The first and second materials flowing through the extrusion die 119 are mutually coupled (Figs. 4 and 5) so that through the outflow port 124 a first continuous elongated element 117 is delivered that is defined by a first longitudinal portion 125 and a second longitudinal portion 126 disposed close to each other and made up of the first and second elastomeric materials, respectively. In more detail, the outflow port 124 preferably has a perimetral profile of a substantially flattened conformation, the size of greater width of which corresponds to at least 1.5 times the size of smaller width. Correspondingly, the continuous elongated element 117 extruded through the outflow port 124 will have a substantially flattened cross-section profile with a width L at least equal to 1.5 times the thickness H size. As shown in Figs. 4 and 5, the width L and thickness H of the continuous elongated element 117 correspond to the size of greater width and the size of smaller width respectively of the outflow port 124.

As can be viewed from Fig. 3, the first and second inlet channels 122, 123 converge towards the outflow port 124 at positions that are substantially aligned with each other and parallel to the size of greater width L. Consequently, according to the conformation of the continuous elongated element 117 extruded from the outflow port 124, the first and second longitudinal portions 125, 126 are respectively aligned along a main extension axis Z of the cross-section profile of the elongated element, as shown in Figs. 4 and 5.

It is also preferably provided that the first and second inlet channels 122, 123 be separated from each other, at the die 119, by means of a partition 127 at a distal position relative to said outflow port 124. Preferably, the partition 127 is substantially disposed in a plane that is inclined to the size of greater width L of the outflow port 124, so that in the continuous elongated element 117 obtained, the first and second longitudinal portions 125, 126 are delimited by an interface line 117a correspondingly inclined to the main extension axis Z, just as an indication according to an angle preferably included between about 15° and about 90°, and more preferably included between about 40° and about 50°.

Alternatively, the first and second longitudinal portions 125, 126 can be provided to be superposed in a direction perpendicular to the main extension axis Z and preferably delimited by an interface line 117a substantially parallel to the main extension axis Z.

The continuous elongated element 117 coming out of the extrusion die 119 is laid on the carcass structure 2 or other forming support 104 in the form of coils wound up following a predetermined path.

To this aim, through the robotized arm 109, the carcass structure 2 carried by the primary drum 103 or other forming support, is positioned in front of the outflow port 124 of the extrusion nozzle 119 and submitted to a circumferential-distribution rotatory motion around a geometric rotation axis X thereof, upon the action of motor 116 or other suitable rotational-driving devices. By effect of this circumferential-distribution rotatory motion the continuous elongated element delivered from the outflow port 124 is suitably distributed, to form the circumferential coils 128 on the forming support 2, 104.

Simultaneously, the different movable sections 112, 113, 114 and/or the head 115 associated with the robotized arm 109, and/or other suitable translational-driving devices, move the forming support 2, 104 in front of the extrusion die 119 through controlled relative displacements of transverse distribution, so that the coils 128 made up of the continuous elongated element 117 are distributed according to a desired path to cause formation of at least one layered component 129 having a first layer 130 and a second layer 131 consisting of the first and second elastomeric materials, respectively.

In more detail, each of the coils 128 formed following laying of the continuous elongated element 117 identifies therealong, a corresponding stretch of the first longitudinal portion 125 coupled with a corresponding stretch of the second longitudinal portion 126. Laying is carried out in such a manner that the consecutive stretches of the first longitudinal portion 125 belonging each to one of the coils 128, are disposed against each other to form the first layer 130 preferably having a thickness included between about 0.2 mm and about 10 mm and more preferably between about 2 mm and about 6 mm. The consecutive stretches of the second longitudinal portion 126, in turn, belonging each to one of the coils 128, are disposed against each other, to form the second layer 131 overlapping the first layer 130.

If the first and second longitudinal portions 125, 126 of the continuous elongated element 117 are superposed at right angles relative to the main extension axis Z, the above described formation of layers 130, 131 can be obtained by disposing the longitudinal element itself in such a manner that, during formation of each coil 128, the main extension axis Z is substantially parallel to a plane tangent to the surface of the forming support 2, 104, at the laying point of the elongated element itself.

If, on the contrary, as in the example shown in Figs. 4 and 5, the first and second longitudinal portions 125, 126 of the continuous elongated element 117 are aligned in parallel relationship with the main axis Z, each of the coils 128 is provided to partly overlap the previously formed coil, except for laying of the first coil, so that the second longitudinal portion 126 of the elongated element, in the stretch belonging to each coil 128, is superposed relative to the first longitudinal portion 125. The first longitudinal portion 125 in turn will be at least partly interposed between the forming support 2, 104 and the second longitudinal portion 126 of the continuous elongated element 117.

Therefore it is advantageously possible to manufacture, in a single operation, a first structural element represented by the first layer 130, together with at least one portion of a second structural element represented by the second layer 131. In the described example and with reference to the accompanying drawings, the first and second structural elements are represented by the under-layer 9 and tread band 8 respectively, that are directly made at a radially external position to the carcass structure 2 and more specifically on the belt structure 7, before or after associating said belt structure with the remaining parts of the carcass structure 2.

If required, the first layer 130 can advantageously have a very reduced thickness, even smaller than 0.5 mm, without involving complications in the correct laying of the continuous elongated element 117. In fact, even if the first longitudinal portion 125 designed to form the first layer 130 has small sizes, the presence of the second longitudinal portion 126 coupled therewith enables a continuous and uniform dragging along of the first longitudinal portion emerging from die 119 and ensures a structural consistency to the continuous elongated element as a whole, which is suitable for correct laying on the forming support.

If required, the first and/or second extruders 120, 121 can be equipped with control devices, not further described or illustrated as they can be made in any convenient manner, which for example enable the operation speed of the extruders themselves to be modified and/or the amount of the elastomeric material sent into the die 119 to be partly reduced so as to suitably modulate delivery of the first and/or second elastomeric material at the exit. Thus it is possible to obtain thickness variations in the first and/or second layers 130, 131 during delivery, or to keep the thickness of the obtained layered components to a predetermined constant value, or also to make structural elements of variable thickness.

In case of need, the control devices can also disable delivery of the first and/or second material thereby allowing delivery of a continuous elongated element 117 made of a single material. This also enables manufacture of layered components 129 in which the first and/or second layer 130, 131 have an interrupted and/or alternated extension.

If required, at least one covering layer 132 of elastomeric material can be applied to the layered component 129, said covering layer preferably having the same composition as the second layer 131 of the layered component that will be interposed between the first layer 130 and the covering layer itself.

This solution is particularly advantageous when the second layer 131 of the layered component 129 must only constitute part of the structural element coupled with the first layer 130.

In the embodiment shown, the covering layer 132 is formed by a first auxiliary unit 133 comprising a third extruder 134 or equivalent devices designed to deliver a second continuous elongated element (not shown) onto the layered component 129 previously formed on the carcass structure 2, or other forming support that, through the robotized arm 109, is brought in front of the auxiliary unit itself and suitably driven in rotation and moved in front of the latter so that the second continuous elongated element is distributed into coils wound up according to a predetermined path. Thus the covering layer 132 is obtained, which layer in the embodiment herein shown, together with the second layer 131 of the layered component 129 forms the tread band 8.

As an alternative to the above description, the covering layer 132 can be prepared as a semifinished product in the form of a continuous strip of a length corresponding to the circumferential extension of the layered component 129. In this case, the auxiliary unit 133 will be provided with devices for winding the strip of elastomeric material on the layered component 129 and for mutually joining the opposite ends of the strip wound up on said layered component 129, in a manner known by itself.

It is to be pointed out that the auxiliary unit 133 utilised for manufacturing the covering layer 132 will require a lower productivity than that usually needed in the known art for the units dedicated to the manufacture of the whole tread band 8.

In addition to, or in place of the first auxiliary unit 133, a second auxiliary unit (not shown) can be provided, said unit being designed to apply at least one base layer of elastomeric material to the carcass structure 2 or other forming support, said base layer being interposed between the forming support itself and the first layer 130 of the layered component 129, subsequently formed on the base layer. In the same manner as described with reference to the first auxiliary unit 133, this second auxiliary unit too may comprise a respective extruder or similar devices, to deliver a third continuous elongated element disposed in a manner adapted to form coils wound up in a predetermined path on the carcass structure 2 or other forming support positioned and suitably moved in front of the auxiliary unit itself by means of the robotized arm 109 or other handling devices.

Alternatively, the second auxiliary unit may comprise devices designed to arrange a semifinished product of elastomeric material in the form of a strip of a length corresponding to the circumferential extension of the carcass structure 2 or other forming support, then winding this strip on the forming support and subsequently joining the opposite ends of the strip wound up on said forming support.

The base layer can be made of the same material as, or a material compatible with, the material forming the first layer 130 that will be interposed between the base layer itself and the second layer 131 of the layered component 129. In case of need, this enables the obtainable thickness of the first layer 130 in the layered component 129 to be increased and/or the layered component 129 to be coupled with any different structural element constituting the base layer.

In addition to, or in place of formation of the tread band 8 and respective under-layer 9, the above described unit 118 for manufacturing layered components can be designed for manufacturing the sidewalls 10, possible auxiliary support inserts 11, said liner and/or any other structural element of elastomeric material of the tyre 1 under working.

In more detail, operation of the robotized arm 109 and of unit 118 for manufacturing layered components, or a similar unit combined with apparatus 1, may be provided to be co-ordinated so as to cause formation of the continuous elongated element 117 laterally against the carcass structure 2, the obtained layered component 129 thereby constituting at least part of the sidewall 10 of tyre 1. Thus, sidewalls 10 made up of two or more portions consisting of different elastomeric materials can be manufactured.

In addition or as an alternative to the above, operation of unit 118 for manufacturing layered components and of the robotized arm 109 can be co-ordinated so as to carry out laying of the continuous elongated element 117 at an axially external position to the forming support, before or after application of the carcass structure 2, to manufacture possible auxiliary support inserts 11 that, after the carcass structure 2 is disposed on the forming support, will appear to be laterally applied, at the inside or outside of the carcass ply 6.

Likewise, a unit 118 for manufacturing layered components can be used to make a liner in combination with a so-called under-liner and/or at least part of the possible auxiliary support inserts 11 or other structural elements of tyre 1, to be set internally of the carcass structure 2.

When manufacture of the tread band 8 and sidewalls 10 has been completed, the robotized arm 109 carries out a new translation of the primary drum 104 to position it in front of devices that, if required, disengage the assembled tyre 1 from said primary drum 140 and transfer it into a mould or other devices used for carrying out a moulding and curing step on the tyre itself.

It will be recognised that the invention can be also advantageously utilised, with the aid of the unit for forming layered components of the above described type, for making manufactured articles different from tyres for motor-vehicles. In particular, the invention can be for example used for making layered elements such as expandable bladders of the type currently used in vulcanisation apparatus and/or inflatable bags used in apparatus for manufacturing the tyres themselves.

## Claims

1. A method of manufacturing a tyre for vehicle wheels, comprising the steps of:
- forming a carcass structure (2) comprising elongated reinforcing elements incorporated in an elastomer matrix;
- associating structural elements of elastomeric material (8, 9, 10, 11) with said carcass structure (2);
wherein the step of associating the structural elements of elastomeric material (8, 9, 10, 11) with the carcass structure (2) comprises preparation of at least one layered component (129) by the steps of:
- conveying a first and a second elastomeric materials towards an extrusion die (119);
- coupling the first and second elastomeric materials through said extrusion die (119), to deliver a first continuous elongated element (117) defined by a first longitudinal portion (125) and a second longitudinal portion (126) disposed in side by side relationship and made up of said first and said second elastomeric materials, respectively,
- laying said continuous elongated element (117) on a forming support (2, 104) so as to form said layered component (129) having a first layer (130) and a second layer (131) consisting of said first and second elastomeric materials, respectively;
- curing the tyre (1),
**characterized in that** the continuous elongated element (117) is laid in the form of coils (128) wound up according to a predetermined path, wherein in said laying step consecutive sections of the first longitudinal portion (125) of the continuous elongated element (117) belonging each to one of the coils (128) are disposed against each other to form the first layer (130), and consecutive sections of the second longitudinal portion (126) belonging each to one of the coils (128) are disposed against each other to form the second layer (131) overlapping the first layer (130).

2. A method as claimed in claim 1, wherein the continuous elongated element (117) is shaped so as to have a substantially flattened cross-section profile.

3. A method as claimed in claim 2, wherein said cross section has a conformation involving a size in width equal to at least 1.5 times the thickness size.

4. A method as claimed in claim 2 or 3, wherein the continuous elongated element (117) is such shaped as to have said first and second longitudinal portions (125, 126) respectively aligned along a main extension axis (Z) of the cross-section profile of the continuous elongated element (117).

5. A method as claimed in claim 1, wherein the continuous elongated element (117) is laid on the forming support (2, 104) with a main extension axis (Z) of its cross-section profile substantially parallel to a plane tangent to a surface of the forming support (2, 104) at a laying point of the elongated element itself.

6. A method as claimed in claim 1, wherein in the laying step the first longitudinal portion (125) of the continuous elongated element (117) is at least partly interposed between the forming support (2, 104) and the second longitudinal portion (126) of the continuous elongated element (117).

7. A method as claimed in claim 1, further comprising the step of modulating delivery of at least one of said first and second materials at the exit of the die (119), so as to cause a variation in thickness of one of said first and second layers (130, 131) relative to the other layer.

8. A method as claimed in claim 1, further comprising the step of selectively disabling delivery of one of said first and second materials at the exit of the die (119), so as to cause an interruption in the extension of the corresponding first or second layers (130, 131) in the layered component (129).

9. A method as claimed in claim 1, wherein conveying of the first and second elastomeric materials is carried out by a first and a second extruder (120, 121), respectively.

10. A method as claimed in claim 1, wherein laying of the continuous elongated element (117) comprises the steps of:
- positioning the forming support (2, 104) adjacent to the extrusion die (119);
- giving the forming support (2, 104) a circumferential-distribution rotatory motion around a geometric rotation axis (X), so that the continuous elongated element (117) delivered from the extrusion die (119) is circumferentially distributed on the forming support (2, 104);
- carrying out controlled relative displacements for transverse distribution between the forming support (2, 104) and the extrusion die (119) so as to form said coils (128).

11. A method as claimed in claim 1, further comprising the step of applying at least one covering layer (132) of elastomeric material onto said layered component (129), the second layer (131) of the layered component (129) being interposed between said first layer (130) and the covering layer (132).

12. A method as claimed in claim 11, wherein the covering layer (132) is formed by the steps of:
- delivering a second continuous elongated element;
- laying said second continuous elongated element on the layered component (129), by means of coils wound up according to a predetermined path, so as to form said covering layer (132).

13. A method as claimed in claim 11, wherein the second continuous elongated element is extruded from an extruder (134) simultaneously with laying of same on the layered component (129).

14. A method as claimed in claim 11, wherein the covering layer (132) is formed by the steps of:
- forming a strip of elastomeric material of a length corresponding to the circumferential extension of the layered component (129);
- winding the strip of elastomeric material on the layered component (129);
- mutually joining the opposite ends of the strip wound on the layered component (129).

15. A method as claimed in claim 11, wherein the covering layer (132) is made of said second elastomeric material.

16. A method as claimed in claim 1, wherein before formation of the layered component (129) the step of applying at least one base layer of elastomeric material onto the forming support (2, 104) is carried out, the first layer (130) of the layered component (129) being interposed between the second layer (131) and the base layer.

17. A method as claimed in claim 16, wherein the base component is formed by the steps of:
- delivering a third continuous elongated element;
- laying said third continuous elongated element on the forming support (2, 104), by means of coils wound according to a predetermined path, so as to form said base layer.

18. A method as claimed in claim 17, wherein the third continuous elongated element is delivered from a respective extruder simultaneously with laying of same on the forming support (2, 104).

19. A method as claimed in claim 16, wherein the base layer is formed by the steps of:
- forming a strip of elastomeric material of a length corresponding to the extension of the forming support (2, 104);
- winding the strip of elastomeric material on the forming support (2, 104);
- mutually joining the opposite ends of the strip wound up on the forming support (2, 104).

20. A method as claimed in claim 16, wherein the base layer is made of said first elastomeric material.

21. A method as claimed in claim 1, wherein laying of the first continuous elongated element (117) is carried out at a radially external position to the carcass structure (2) previously set on the forming support (2, 104), so as to form a layered component (129) of a tread band (8) of said tyre (1).

22. A method as claimed in claim 1, further comprising the steps of setting a belt structure (7) and associating said belt structure (7) with the carcass structure (2), wherein laying of the continuous elongated element (117) is carried out at a radially external position to said belt structure (7), before or after associating the same with the carcass structure (2), so as to form a layered component (129) of a tread band (8) of said tyre (1).

23. A method as claimed in claim 1, wherein laying of the continuous elongated element (117) is carried out laterally against the carcass structure (2), so as to form a layered component (129) of a sidewall (10) of said tyre (1).

24. A method as claimed in claim 1, wherein laying of the continuous elongated element (117) is carried out at an axially external position to the forming support (2, 104) so as to form a layered component (129) of an auxiliary support insert (11), before disposing the carcass structure (2) on the forming support (2, 104) for applying said auxiliary support insert (11) laterally at the inside of the carcass structure (2) itself.

25. A method as claimed in claim 1, wherein the first layer (130) has a thickness included between about 0.2 mm and about 10 mm.

26. A method as claimed in claim 25, wherein said thickness is included between about 2 mm and about 6 mm.

27. A method as claimed in claim 1, wherein said first (125) and second (126) longitudinal portions are delimited by an interface line (117a) forming an angle relative to a main extension axis (Z) of the cross-section profile of said continuous elongated element (117) that is included between about 15° and about 90°.

28. A method as claimed in claim 27, wherein said angle is included between about 40° and about 50°.

29. An apparatus for manufacturing tyres for vehicle wheels, comprising:
- devices (101) designed to form a carcass structure (2) comprising elongated reinforcing elements incorporated into an elastomer matrix;
- devices (118, 133) for associating structural elements of elastomeric materials (8, 9, 10, 11) with said carcass structure (2);
- devices for curing said tyre (1),
wherein the devices for associating the structural elements of elastomeric material with the carcass structure (2) comprise at least one unit (118) for manufacturing layered components, comprising:
- first devices (120) for feeding a first elastomeric material;
- second devices (121) for feeding a second elastomeric material;
- an extrusion die (119) communicating with said first and second feeding devices (120, 121) to deliver a first continuous elongated element (117) from an outflow port (124), said first continuous elongated element being defined by a first longitudinal portion (125) and a second longitudinal portion (126) disposed in side by side relationship and made up of said first and second elastomeric materials, respectively,
- members (109) for laying said continuous elongated element (117) on a forming support (2, 104), so as to form a layered component (129) having a first layer (130) and a second layer (131) consisting of said first and said second elastomeric materials, respectively, **characterized in that** upon the action of said laying-down members (109) the continuous elongated element (117) is laid into coils (128) wound according to a predetermined path, wherein consecutive sections of the first longitudinal portion (125) of the continuous elongated element (117) belonging each to one of the coils (128), are disposed against each other to form the first layer (130), and consecutive sections of the second longitudinal portion (126) belonging each to one of the coils (128) are disposed against each other to form the second layer (131) overlapping the first layer (130).

30. An apparatus as claimed in claim 29, wherein said outflow port (124) has a substantially flattened conformation.

31. An apparatus as claimed in claim 30, wherein the outflow port (124) has one size of greater width corresponding to at least 1.5 times a size of the same of smaller width.

32. An apparatus as claimed in claim 30, wherein the extrusion die (119) has:
- a first inlet channel (122) communicating with the first feeding devices (120); and
- a second inlet channel (123) communicating with the second feeding devices (121);
wherein the first and second inlet channels (122, 123) converge towards the outflow port (124) at mutually aligned positions parallel to a main extension axis of the outflow port (124).

33. An apparatus as claimed in claim 29, further comprising devices for modulating delivery of at least one of said first and second elastomeric materials at the exit of the die (119), to cause variations in the thickness of one of said first and second layers (130, 131) relative to the other layer.

34. An apparatus as claimed in claim 29, further comprising devices for selectively disabling delivery of one of said first and second materials coming out of the die (119) to cause an interruption in the extension of the corresponding first or second layers in the layered component (129).

35. An apparatus as claimed in claim 29, wherein said first feeding device (120) and second feeding device (121) comprise a first and a second extruder, respectively.

36. An apparatus as claimed in claim 29, wherein said unit (118) for manufacturing layered components comprises:
- rotational-driving devices (116) to give the forming support (2, 104) a circumferential-distribution rotatory motion around a geometric rotation axis (X), so that the continuous elongated element (117) delivered from the extrusion die (119) is circumferentially distributed on the forming support (2, 104);
- translational-driving devices (112, 113, 114, 115) to carry out controlled relative displacements for transverse distribution between the forming support (2, 104) and the extrusion die (119), so as to form said coils (128).

37. An apparatus as claimed in claim 29, further comprising a first auxiliary unit (133) to apply at least one covering layer (132) of elastomeric material onto said layered component (129), the second layer (131) of the layered component (129) being interposed between the first layer (130) and the covering layer (132).

38. An apparatus as claimed in claim 37, wherein said first auxiliary unit (133) comprises:
- devices for delivering a second continuous elongated element;
- devices for laying said second continuous elongated element on said layered component (129), by means of coils wound according to a predetermined path, so as to form said covering layer (132).

39. An apparatus as claimed in claim 38, wherein the devices for delivering the second continuous elongated element comprise a third extruder (134).

40. An apparatus as claimed in claim 37, wherein said first auxiliary unit (133) comprises:
- devices for setting a strip of elastomeric material of a length corresponding to the extension of the layered component (129);
- devices for winding the strip of elastomeric material on the layered component (129);
- devices for mutually joining the opposite ends of the strip wound up on the layered component (129).

41. An apparatus as claimed in claim 29, further comprising a second auxiliary unit for applying at least one base layer of elastomeric material onto the forming support (2, 104), before formation of the layered component (129).

42. An apparatus as claimed in claim 41, wherein said second auxiliary unit comprises:
- devices for delivering a third continuous elongated element;
- devices for laying said third continuous elongated element on the forming support (2, 104), by means of coils wound up according to a predetermined path, so as to form said base layer.

43. An apparatus as claimed in claim 42, wherein the devices for delivering the third continuous elongated element comprise a fourth extruder.

44. An apparatus as claimed in claim 41, wherein said second auxiliary unit comprises:
- devices for setting a strip of elastomeric material of a length corresponding to the extension of the forming support (2, 104);
- devices for winding the strip of elastomeric material on the forming support (2, 104);
- devices for mutually joining the opposite ends of the strip wound up on the forming support (2, 104).

45. An apparatus as claimed in claim 29, wherein said at least one unit (118) for manufacturing layered components is designed to make tread bands (8) at a radially external position to the carcass structure (2).

46. An apparatus as claimed in claim 29, further comprising devices (105, 107) for manufacturing a belt structure (7) and devices (108) for associating said belt structure (107) with the carcass structure (2) at a radially external position, wherein said at least one unit (118) for manufacturing layered components is designed to make a tread band (8) at a radially external position to said belt structure (7).

47. An apparatus as claimed in claim 29, wherein said at least one unit (118) for manufacturing layered components is designed to make sidewalls (10) laterally disposed against the carcass structure (2).

48. An apparatus as claimed in claim 29, wherein said at least one unit (118) for manufacturing layered components is designed to make auxiliary support inserts (11) to be associated with the carcass structure (2).

49. An apparatus as claimed in claim 29, wherein the extrusion die (119) is provided with:
- a first inlet channel (122) communicating with the first feeding devices (120); and
- a second inlet channel (123) communicating with the second feeding devices (121);
wherein the first and second inlet channels (122, 123) converge towards the outflow port (124);
- said first (122) and second (123) inlet channels being respectively separated in correspondence with said die (119) at a distal position relative to said outflow port (124), by a partition (127).

## Patentansprüche

1. Verfahren zur Herstellung eines Reifens für Fahrzeugräder, das die Schritte aufweist:
- Ausbilden einer Karkassenstruktur (2), die längliche Verstärkungselemente aufweist, die in einer Elastomermatrix eingebunden sind;
- Verbinden von Strukturelementen aus elastomerem Material (8, 9, 10, 11) mit der Karkassenstruktur (2);
wobei der Schritt des Verbindens der Strukturelemente aus elastomerem Material (8, 9, 10, 11) mit der Karkassenstruktur (2) die Vorbereitung zumindest einer geschichteten Komponente (129) durch die folgenden Schritte umfasst:
- Förderns eines ersten und eines zweiten elastomeren Materials hin zu einem Extrusionswerkzeug (119);
- Koppelns des ersten und zweiten elastomeren Materials durch das Extrusionswerkzeug (119) um ein erstes kontinuierliches, längliches Element (117) zuzuführen, das durch einen ersten Längsabschnitt (125) und einen zweiten Längsabschnitt definiert ist, die in einer Lagebeziehung nebeneinander angeordnet sind und jeweils aus den ersten und zweiten elastomeren Materialien gebildet sind,
- Ablegens der kontinuierlichen, länglichen Elemente (117) auf eine Formabstützung (2, 104), um die geschichtete Komponente (129) auszubilden, die eine erste Schicht (130) und eine zweite Schicht (131) aufweist, die jeweils aus den ersten und zweiten elastomeren Materialien bestehen;
- Vulkanisierens des Reifens (1),
**dadurch gekennzeichnet, dass** das kontinuierliche, längliche Element (117) in der Form von Windungen (128), die entsprechend einem vorbestimmten Pfad aufgewickelt sind, abgelegt wird, wobei im Schritt des Ablegens aufeinanderfolgende Bereiche des ersten Längsabschnitts (125) des kontinuierlichen, länglichen Elements (117), die jeweils zu einer der Windungen (128) gehören, gegeneinander angeordnet sind, um die erste Schicht (130) auszubilden und aufeinanderfolgende Bereiche des zweiten Längsabschnitts (126), die jeweils zu einer der Windungen (128) gehören, gegeneinander angeordnet sind, um die zweite Schicht (131) auszubilden, welche die erste Schicht (130) überlappt.

2. Verfahren nach Anspruch 1, bei dem das kontinuierliche, längliche Element (117) derart geformt ist, dass es ein im Wesentlichen abgeflachtes Querschnittsprofil aufweist.

3. Verfahren nach Anspruch 2, bei dem der Querschnitt eine Gestalt mit einer Breitenabmessung, die gleich der zumindest 1,5-fachen Dickenabmessung ist, aufweist.

4. Verfahren nach Anspruch 2 oder 3, bei dem das kontinuierliche, längliche Element (117) derart geformt ist, dass es die ersten und zweiten Längsabschnitte (125, 126) aufweist, die jeweils entlang einer Haupterstreckungsachse (Z) des Querschnittsprofils des kontinuierlichen, länglichen Elements (117) ausgerichtet sind.

5. Verfahren nach Anspruch 1, bei dem das kontinuierliche, längliche Element (117) mit einer Haupterstreckungsachse (Z) seines Querschnittsprofils, an einem Ablagepunkt des länglichen Elements selbst, im Wesentlichen parallel zu einer Ebene, die zu einer Fläche der Formabstützung (2, 104) tangential ist, auf die Formabstützung (2, 104) abgelegt wird.

6. Verfahren nach Anspruch 1, bei dem im Schritt des Ablegens der erste Längsabschnitt (125) des kontinuierlichen, länglichen Elements (117) zumindest teilweise zwischen die Formabstützung (2, 104) und dem zweiten Längsabschnitt (126) des kontinuierlichen, länglichen Elements (117) eingefügt wird.

7. Verfahren nach Anspruch 1, das ferner den Schritt des Anpassens des Förderstroms der ersten und/oder zweiten Materialien am Ausgang des Werkzeugs (119) umfasst, um eine Dickenabweichung der ersten oder zweiten Schicht (130, 131) relativ zur anderen Schicht hervorzurufen.

8. Verfahren nach Anspruch 1, das ferner den Schritt des gezielten Deaktivierens des Förderstroms der ersten oder zweiten Materialien am Ausgang des Werkzeugs (119) umfasst, um eine Unterbrechung in der Erstreckung der entsprechend ersten oder zweiten Schichten (130, 131) in der geschichteten Komponente (129) hervorzurufen.

9. Verfahren nach Anspruch 1, bei dem das Fördern des ersten und zweiten elastomeren Materials jeweils durch einen ersten und einen zweiten Extruder (120, 121) ausgeführt wird.

10. Verfahren nach Anspruch 1, bei dem das Ablegen des kontinuierlichen, länglichen Elements (117) die folgenden Schritte umfasst:
- Positionierens der Formabstützung (2, 104) angrenzend an das Extrusionswerkzeug (119);
- Beaufschlagens der Formabstützung (2, 104) mit einer umfänglichen Verteilungsdrehbewegung um eine geometrische Drehachse (X) derart, dass das kontinuierliche, längliche Element (117), das vom Extrusionswerkzeug (119) geliefert wird, umfänglich auf der Formabstützung (2, 104) verteilt wird;
- Ausführens von kontrollierten Relativverschiebungen für Querverteilung zwischen der Formabstützung (2, 104) und dem Extrusionswerkzeug (119), um die Windungen (128) auszubilden.

11. Verfahren nach Anspruch 1, das ferner den Schritt des Aufbringens zumindest einer Deckschicht (132) aus elastomeren Material auf die geschichtete Komponente (129) umfasst, wobei die zweite Schicht (131) der geschichteten Komponente (129) zwischen der ersten Schicht (130) und der Deckschicht (132) eingefügt ist.

12. Verfahren nach Anspruch 11, bei dem die Deckschicht (132) durch die folgenden Schritte ausgebildet wird:
- Zuführens eines zweiten, kontinuierlichen, länglichen Elements; und
- Ablegens des zweiten, kontinuierlichen, länglichen Elements auf die geschichtete Komponente (129), mittels Windungen, die entsprechend einem vorbestimmten Pfad aufgewickelt sind, um die Deckschicht (123) auszubilden.

13. Verfahren nach Anspruch 11, bei dem das zweite, kontinuierliche, längliche Element von einem Extruder (134) gleichzeitig mit dem Ablegen von selbigem auf die geschichtete Komponente (129) extrudiert wird.

14. Verfahren nach Anspruch 11, bei dem die Deckschicht (132) durch die folgenden Schritte ausgebildet wird:
- Ausbildens eines Streifens aus elastomerem Material von einer Länge, die der umfänglichen Erstreckung der geschichteten Komponente (129) entspricht;
- Wickelns des Streifens aus elastomerem Material auf die geschichtete Komponente (129);
- gegenseitigen Verbindens der gegenüberliegenden Enden des auf die geschichtete Komponente (129) gewickelten Streifens.

15. Verfahren nach Anspruch 11, bei dem die Deckschicht (132) aus dem zweiten, elastomeren Material gebildet wird.

16. Verfahren nach Anspruch 1, bei dem vor Ausbildung der geschichteten Komponente (129) der Schritt des Aufbringens zumindest einer Grundschicht aus elastomerem Material auf die Formabstützung (2, 104) ausgeführt wird, wobei die erste Schicht (130) der geschichteten Komponente (129) zwischen der zweiten Schicht (131) und der Grundschicht eingefügt wird.

17. Verfahren nach Anspruch 16, bei dem die Grundkomponente durch die folgenden Schritte ausgebildet wird:
- Zuführens eines dritten, kontinuierlichen, länglichen Elements;
- Ablegens des dritten, kontinuierlichen, länglichen Elements auf die Formabstützung (2, 104), mittels Windungen, die entsprechend einem vorbestimmten Pfad gewickelt sind, um die Grundschicht auszubilden.

18. Verfahren nach Anspruch 17, wobei das dritte, kontinuierliche, längliche Element von einem jeweiligen Extruder gelichzeitig mit dem Ablegen von selbigem auf die Formabstützung (2, 104) geliefert wird.

19. Verfahren nach Anspruch 16, bei dem die Grundschicht durch die folgenden Schritte ausgebildet wird:
- Ausbildens eines Streifens aus elastomerem Material von einer Länge, die der Erstreckung der Formabstützung (2, 104) entspricht;
- Wickelns des Streifens aus elastomerem Material auf die Formabstützung (2, 104);
- gegenseitigen aneinander Fügens der gegenüberliegenden Enden des auf die Formabstützung (2, 104) aufgewickelten Streifens,

20. Verfahren nach Anspruch 16, bei dem die Grundschicht aus dem ersten elastomeren Material gebildet wird.

21. Verfahren nach Anspruch 1, bei dem das Ablegen des ersten kontinuierlichen, länglichen Elements (117) an einer radialen Außenposition an die zuvor auf die Formabstützung (2, 104) gesetzte Karkassenstruktur (2) ausgeführt wird, um eine geschichtete Komponente (129) eines Laufflächenbands (8) des Reifens (1) auszubilden.

22. Verfahren nach Anspruch 1, das ferner die Schritte des Setzens einer Gürtelstruktur (7) und Verbindens der Gürtelstruktur (7) mit der Karkassenstruktur (2) umfasst, wobei das Ablegen des kontinuierlichen, länglichen Elements (117) an einer radialen Außenposition an die Gürtelstruktur (7) ausgeführt wird, bevor oder nachdem die Selbige mit der Karkassenstruktur (2) verbunden wird, um eine geschichtete Komponente (129) eines Laufflächenbandes (8) des Reifens (1) auszubilden.

23. Verfahren nach Anspruch 1, bei dem das Ablegen des kontinuierlichen, länglichen Elements (117) seitlich gegen die Karkassenstruktur (2) ausgeführt wird, um eine geschichtete Komponente (129) einer Seitenwand (10) des Reifens (1) auszubilden.

24. Verfahren nach Anspruch 1, bei dem das Legen des kontinuierlichen, länglichen Elements (117) an einer axialen Außenposition an der Formabstützung (2, 104) ausgeführt wird, um eine geschichtete Komponente (129) eines Hilfsabstützungseinsatzes (11) auszubilden, bevor die Karkassenstruktur (2) auf der Formabstützung (2, 104), zum Aufbringen des Hilfsabstützungseinsatzes (11) seitlich am Inneren der Karkassenstruktur (2) selbst, angeordnet wird.

25. Verfahren nach Anspruch 1, bei dem die erste Schicht (130) ein Dicke zwischen ungefähr 0,2 mm und ungefähr 10 mm aufweist.

26. Verfahren nach Anspruch 25, bei dem die Dicke zwischen ungefähr 2 mm und ungefähr 6 mm liegt.

27. Verfahren nach Anspruch 1, bei dem die ersten (125) und zweiten (126) Längsabschnitte durch eine Verbindungslinie (117a) begrenzt sind, die einen Winkel relativ zur Haupterstreckungsachse (Z) des Querschnittsprofils des kontinuierlichen, länglichen Elements (117) ausbildet, der zwischen ungefähr 15° und ungefähr 90° liegt.

28. Verfahren nach Anspruch 27, bei dem der Winkel zwischen ungefähr 40° und ungefähr 50° liegt.

29. Vorrichtung zur Herstellung von Reifen für Fahrzeugräder, aufweisend:
- Einrichtungen (101), die vorgesehen sind, eine Karkassenstruktur (2) auszubilden, welche längliche Verstärkungselemente aufweist, die in eine Elastomermatrix eingebunden sind;
- Einrichtungen (118, 133) zum Verbinden von Strukturelementen aus elastomerem Material (8, 9, 10, 11) mit der Karkassenstruktur (2);
- Einrichtungen zum Vulkanisieren des Reifens (1),
wobei die Einrichtungen zum Verbinden der Strukturelemente aus elastomerem Material mit der Karkassenstruktur (2) zumindest eine Einheit (118) zum Fertigen geschichteter Komponenten aufweisen, mit:
- ersten Einrichtungen (120) zum Zuführen eines ersten elastomeren Materials;
- zweiten Einrichtungen (121) zum Zuführen eines zweiten elastomeren Materials;
- einem Extrusionswerkzeug (119), das mit den ersten und zweiten Zuführeinrichtungen (120, 121) in Verbindung steht, um ein erstes, kontinuierliches, längliches Element (117) aus einem Ausflussanschluss (124) zuzuführen, wobei das erste kontinuierliche, längliche Element durch einen ersten Längsabschnitt (125) und einen zweiten Längsabschnitt (126) definiert ist, die in einer Lagebeziehung nebeneinander angeordnet sind und jeweils aus den ersten und zweiten elastomeren Materialien gebildet sind,
- Elemente (109) zum Ablegen des kontinuierlichen, länglichen Elements (117) auf eine Formabstützung (2, 104), um eine geschichtete Komponente (129) auszubilden, die eine erste Schicht (130) und eine zweite Schicht (131), die jeweils aus dem ersten und dem zweiten elastomeren Material bestehen, aufweist, **dadurch gekennzeichnet dass** bei der Tätigkeit der Ablegeelemente (109) das kontinuierliche, längliche Element (117) in Windungen (128) abgelegt ist, die entsprechend einem vorbestimmten Pfad gewickelt sind, wobei aufeinanderfolgende Bereiche des ersten Längsabschnitts (125) des ersten kontinuierlichen, länglichen Elements (117), die jeweils zu einer der Windungen (128) gehören, gegeneinander angeordnet sind, um die erste Schicht (130) auszubilden, und aufeinanderfolgende Bereiche des zweiten Längsabschnitts (126), die jeweils zu einer der Windungen (128) gehören, gegeneinander derart angeordnet sind, dass sie die zweite Schicht (131) bilden, welche die erste Schicht (130) überlappt.

30. Vorrichtung nach Anspruch 29, bei welcher der Ausflussanschluss (124) eine im Wesentlichen abgeflachte Gestalt aufweist.

31. Vorrichtung nach Anspruch 30, bei welcher der Ausflussanschluss (124) eine Abmessung größerer Breite aufweist, die zumindest dem 1,5-fachen einer Abmessung schmalerer Breite desselbigen entspricht.

32. Vorrichtung nach Anspruch 30, bei der das Extrusionswerkzeug (119) aufweist:
- einen ersten Einlasskanal (122), der mit den ersten Zuführeinrichtungen (120) verbunden ist; und
- einen zweiten Einlasskanal (123), der mit den zweiten Zuführeinrichtungen (121) verbunden ist;
wobei die ersten und zweiten Einlasskanäle (122, 123) zum Ausflussanschluss (124) hin, bei gegeneinander ausgerichteten Positionen parallel zu einer Haupterstreckungsachse des Ausflussanschlusses (124), ineinander laufen.

33. Vorrichtung nach Anspruch 29, die ferner Einrichtungen zum Anpassen des Förderstroms von zumindest dem ersten und/oder zweiten elastomeren Materialien am Ausgang des Werkzeugs (119) aufweist, um Abweichungen in der Dicke der ersten oder zweiten Schicht (130, 131) relativ zur anderen Schicht hervorzurufen.

34. Vorrichtung nach Anspruch 29, die ferner Einrichtungen zum gezielten Deaktivieren des Förderstroms des ersten oder zweiten Materials, die aus dem Werkzeug (119) kommen aufweist, um eine Unterbrechung in der Erstreckung der entsprechenden ersten oder zweiten Schichten in der geschichteten Komponente (129) hervorzurufen.

35. Vorrichtung nach Anspruch 29, bei der die erste Zuführeinrichtung (120) und zweite Zuführeinrichtung (121) jeweils einen ersten und einen zweiten Extruder aufweisen.

36. Vorrichtung nach Anspruch 29, bei der die Einheit (118) zum Herstellen geschichteter Komponenten aufweist:
- Drehantriebseinrichtungen (116), um die Formabstützung (2, 104) mit einer umfänglichen Verteilungsdrehbewegung um eine geometrische Drehachse (X) zu beaufschlagen, derart dass das kontinuierliche, längliche Element (117), das vom Extrusionswerkzeug (119) zugeführt ist, umfänglich auf der Formabstützung (2, 104) verteilt ist;
- Translationsantriebseinrichtungen (112, 113, 114, 115), um kontrollierte relative Verschiebungen zur transversalen Verteilung zwischen der Formabstützung (2, 104) und dem Extrusionswerkzeug (119) zur transversalen Verteilung auszuführen, um die Windungen (128) auszubilden.

37. Vorrichtung nach Anspruch 29, die ferner eine erste Hilfseinheit (133) aufweist, um zumindest eine Deckschicht (132) aus elastomerem Material auf die geschichtete Komponente (129) aufzubringen, wobei die zweite Schicht (131) der geschichteten Komponente (129) zwischen der ersten Schicht (130) und der Deckschicht (132) eingelegt ist.

38. Vorrichtung nach Anspruch 37, bei der die erste Hilfseinheit (133) aufweist:
- Einrichtungen zum Zuführen eines zweiten, kontinuierlichen, länglichen Elements;
- Einrichtungen zum Ablegen des zweiten, kontinuierlichen, länglichen Elements auf die geschichtete Komponente (129), mittels Windungen, die entsprechend einem vorbestimmten Pfad gewickelt sind, um die Deckschicht (132) auszubilden.

39. Vorrichtung nach Anspruch 38, bei der die Einrichtungen zum Zuführen des zweiten, kontinuierlichen, länglichen Elements einen dritten Extruder (134) aufweisen.

40. Vorrichtung nach Anspruch 37, bei der die erste Hilfseinheit (133) aufweist:
- Einrichtungen zum Setzen eines Streifens aus elastomerem Material mit einer Länge, die der Erstreckung der geschichteten Komponente (129) entspricht;
- Einrichtungen zum Winden des Streifens aus elastomerem Material auf die geschichtete Komponente (129);
- Einrichtungen zum gegenseitigen aneinander fügen der gegenüberliegenden Enden des auf die geschichtete Komponente (129) aufgewickelten Streifens.

41. Vorrichtung nach Anspruch 29, die ferner eine zweite Hilfseinheit zum Aufbringen zumindest einer Grundschicht aus elastomerem Material auf die Formabstützung (2, 104), vor Ausbildung der geschichteten Komponente (129) umfasst.

42. Vorrichtung nach Anspruch 41, bei der die zweie Hilfseinheit aufweist:
- Einrichtungen zum Zuführen eines dritten, kontinuierlichen, länglichen Elements;
- Einrichtungen zum Ablegen des dritten, kontinuierlichen, länglichen Elements auf die Formabstützung (2, 104), mittels Windungen, die entsprechend einem vorbestimmten Pfad aufgewickelt sind, um die Grundschicht auszubilden.

43. Vorrichtung nach Anspruch 42, bei der die Einrichtungen zum Zuführen des dritten, kontinuierlichen, länglichen Elements einen vierten Extruder aufweisen.

44. Vorrichtung nach Anspruch 41, bei der die zweite Hilfseinheit aufweist:
- Einrichtungen zum Setzen eines Streifens aus elastomerem Material einer Länge, die der Erstreckung der Formabstützung (2, 104) entspricht;
- Einrichtungen zum Wickeln des Streifens aus elastomerem Material auf die Formabstützung (2, 104);
- Einrichtungen zum gegenseitigen Aneinanderfügen der gegenüberliegenden Enden des auf die Formabstützung (2, 104) aufgewickelten Streifens.

45. Vorrichtung nach Anspruch 29, bei der zumindest eine Einheit (118) zum Herstellen geschichteter Komponenten ausgebildet ist, Laufflächenbänder (8) an einer radialen Außenposition zu der Karkassenstruktur (2) zu bilden.

46. Vorrichtung nach Anspruch 29, die ferner Einrichtungen (105, 107) zum Herstellen einer Gürtelstruktur (7) und Einrichtungen (108) zum Verbinden der Gürtelstruktur (107) mit der Karkassenstruktur (2) an einer radialen Außenposition aufweist, wobei die zumindest eine Einheit (118) zum Herstellen geschichteter Komponenten ausgelegt ist, ein Laufflächenband (8) an einer radialen Außenpositionen zu der Gürtelstruktur (7) zu bilden.

47. Vorrichtung nach Anspruch 29, bei der zumindest eine Einheit (118) zum Herstellen geschichteter Komponenten ausgelegt ist, um Seitenwände (10) zu bilden, die seitlich gegen die Karkassenstruktur (2) angeordnet sind.

48. Vorrichtung nach Anspruch 29, bei der die zumindest eine Einheit (118) zum Herstellen geschichteter Komponenten ausgelegt ist, mit der Karkassenstruktur (2) zu verbindende Hilfsabstützungseinsätze (11), zu bilden.

49. Vorrichtung nach Anspruch 29, bei der das Extrusionswerkzeug (119) versehen ist mit:
- einem ersten Einlasskanal (122), der mit der ersten Zuführeinrichtung (120) in Verbindung steht; und
- einen zweiten Einlasskanal (123), der mit der zweiten Zuführeirichtung (121) in Verbindung steht;
wobei die ersten und zweiten Einlasskanäle zum Ausflussanschluss (124) hin ineinander laufen;
- die erste (122) und zweite (123) Einlasskanal an einer relativ zum Ausschlussanschluss (124) entfernten Position in Zusammenhang mit dem Werkzeug (119) jeweils durch ein Trennelement (127) getrennt sind.

## Revendications

1. Procédé de fabrication d'un pneumatique pour roues de véhicule, comprenant les étapes de :
- former une structure de carcasse (2) comprenant des éléments de renfort allongés incorporés dans une matrice élastomère ;
- associer des éléments structurels en matériau élastomère (8, 9, 10, 11) à ladite structure de carcasse (2) ;
dans lequel l'étape d'association des éléments structurels en matériau élastomère (8, 9, 10, 11) à la structure de carcasse (2) comprend une préparation d'au moins un composant stratifié (129) par les étapes de :
- transporter un premier et un deuxième matériaux élastomères vers une filière d'extrusion (119) ;
- coupler les premier et deuxième matériaux élastomères à travers ladite filière d'extrusion (119), pour fournir, respectivement, un premier élément allongé continu (117) défini par une première partie longitudinale (125) et une deuxième partie longitudinale (126) disposées côte à côte et formées desdits premier et deuxième matériaux élastomères,
- poser ledit élément allongé continu (117) sur un support de formage (2, 104) de manière à former ledit composant stratifié (129) présentant, respectivement, une première couche (130) et une deuxième couche (131) consistant en lesdits premier et deuxième matériaux élastomères ;
- cuire le pneumatique (1),
**caractérisé en ce que** l'élément allongé continu (117) est posé en forme de spires (128) enroulées selon un chemin prédéfini, dans lequel dans ladite étape de pose, des sections consécutives de la première partie longitudinale (125) de l'élément allongé continu (117) appartenant chacune à une des spires (128) sont disposées l'une contre l'autre pour former la première couche (130), et des sections consécutives de la deuxième partie longitudinale (126) appartenant chacune à une des spires (128) sont disposées l'une contre l'autre pour former la deuxième couche (131) superposée à la première couche (130).

2. Procédé selon la revendication 1, dans lequel l'élément allongé continu (117) est mis en forme de manière à présenter un profil de section transversale sensiblement aplati.

3. Procédé selon la revendication 2, dans lequel ladite section transversale présente une conformation comportant une dimension en largeur égale à au moins 1,5 fois la taille de l'épaisseur.

4. Procédé selon la revendication 2 ou 3, dans lequel l'élément allongé continu (117) est mis en forme de manière à présenter lesdites première et deuxième parties longitudinales (125, 126) alignées respectivement le long d'un axe d'étendue principale (Z) du profil de section transversale de l'élément allongé continu (117).

5. Procédé selon la revendication 1, dans lequel l'élément allongé continu (117) est posé sur le support de formage (2, 104) avec un axe d'étendue principale (Z) de son profil de section transversale sensiblement parallèle à un plan tangent à une surface du support de formage (2, 104) en un point de pose de l'élément allongé lui-même.

6. Procédé selon la revendication 1, dans lequel dans l'étape de pose la première partie longitudinale (125) de l'élément allongé continu (117) est au moins partiellement interposée entre le support de formage (2, 104) et la deuxième partie longitudinale (126) de l'élément allongé continu (117).

7. Procédé selon la revendication 1, comprenant en outre l'étape de modulation de la fourniture d'au moins un desdits premier et deuxième matériaux à la sortie de la filière (119), de manière à provoquer une variation de l'épaisseur d'au moins une desdites première et deuxième couches (130, 131) par rapport à l'autre couche.

8. Procédé selon la revendication 1, comprenant en outre l'étape de désactivation sélective de la fourniture de l'un desdits premier et deuxième matériaux à la sortie de la filière (119), de manière à provoquer une interruption de l'étendue des première ou deuxième couches correspondantes (130, 1131) dans le composant stratifié (129).

9. Procédé selon la revendication 1, dans lequel le transport des premier et deuxième matériaux élastomères est réalisé respectivement par une première et une deuxième extrudeuse (120, 121).

10. Procédé selon la revendication 1, dans lequel la pose de l'élément allongé continu (117) comprend les étapes de :
- positionner le support de formage (2, 104) à côté de la filière d'extrusion (119) ;
- procurer au support de formage (2, 104) un mouvement rotatif de distribution circonférentielle autour d'un axe de rotation géométrique (X), de sorte que l'élément allongé continu (117) fourni par la filière d'extrusion (119) est distribué circonférentiellement sur le support de formage (2, 104) ;
- réaliser des déplacements relatifs contrôlés pour une distribution transversale entre le support de formage (2, 104) et la filière d'extrusion (119) de manière à former lesdites spires (128).

11. Procédé selon la revendication 1, comprenant en outre l'étape d'appliquer au moins une couche de couverture (132) en matériau élastomère sur ledit composant stratifié (129), la deuxième couche (131) du composant stratifié (129) étant interposée entre ladite première couche (130) et la couche de couverture (132).

12. Procédé selon la revendication 11, dans lequel la couche de couverture (132) est formée par les étapes de :
- fournir un deuxième élément allongé continu ;
- poser ledit deuxième élément allongé continu sur le composant stratifié (129), au moyen de spires enroulées selon un chemin prédéterminé, de manière à former ladite couche de couverture (132).

13. Procédé selon la revendication 11, dans lequel le deuxième élément allongé continu est extrudé à partir d'une extrudeuse (134) simultanément avec la pose du même élément sur le composant stratifié (129).

14. Procédé selon la revendication 11, dans lequel la couche de couverture (132) est formée par les étapes de :
- former une bande en matériau élastomère d'une longueur correspondant à l'étendue circonférentielle du composant stratifié (129) ;
- enrouler la bande en matériau élastomère sur le composant stratifié (129) ;
- joindre mutuellement les extrémités opposées de la bande enroulée sur le composant stratifié (129).

15. Procédé selon la revendication 11, dans lequel la couche de couverture (132) est faite dans ledit deuxième matériau élastomère.

16. Procédé selon la revendication 1, dans lequel préalablement au formage du composant stratifié (129) on réalise l'étape d'application d'au moins une couche de base en matériau élastomère sur le support de formage (2, 104), la première couche (130) du composant stratifié (129) étant interposée entre la deuxième couche (131) et la couche de base.

17. Procédé selon la revendication 16, dans lequel le composant de base est formé par les étapes de :
- fournir un troisième élément allongé continu ;
- poser ledit troisième élément allongé continu sur le support de formage (2, 104), au moyen de spires enroulées selon un chemin prédéterminé, de manière à former ladite couche de base.

18. Procédé selon la revendication 17, dans lequel le troisième élément allongé continu est fourni à partir d'une extrudeuse respective simultanément avec la pose du même élément sur le support de formage (2, 104).

19. Procédé selon la revendication 16, dans lequel la couche de base est formée par les étapes de :
- former une bande en matériau élastomère d'une longueur correspondant à l'étendue circonférentielle du support de formage (2, 104) ;
- enrouler la bande en matériau élastomère sur le support de formage (2, 104) ;
- joindre mutuellement les extrémités opposées de la bande enroulée sur le support de formage (2, 104).

20. Procédé selon la revendication 16, dans lequel la couche de base est faite dans ledit premier matériau élastomère.

21. Procédé selon la revendication 1, dans lequel la pose du premier élément allongé continu (117) est réalisée en une position radialement externe à la structure de carcasse (20) préalablement fixée sur le support de formage (2, 104), de manière à former un composant stratifié (129) d'une bande de roulement (8) dudit pneumatique (1).

22. Procédé selon la revendication 1, comprenant en outre les étapes de fixer une structure de ceinture (7) et d'associer ladite structure de ceinture (7) à la structure de carcasse (2), dans lequel la pose de l'élément allongé continu (117) est réalisée en une position radialement externe à ladite structure de ceinture (7), préalablement ou postérieurement à l'association du même élément à la structure de carcasse (2), de manière à former un composant stratifié (129) d'une bande de roulement (8) dudit pneumatique (1).

23. Procédé selon la revendication 1, dans lequel la pose de l'élément allongé continu (117) est réalisée latéralement contre la structure de carcasse (2), de manière à former un composant stratifié (129) d'un flanc (10) dudit pneumatique (1).

24. Procédé selon la revendication 1, dans lequel la pose de l'élément allongé continu (117) est réalisée en une position axialement externe au support de formage (2, 104) de manière à former un composant stratifié (129) d'un insert de support auxiliaire (11), préalablement à la disposition de la structure de carcasse (2) sur le support de formage (2, 104) pour appliquer ledit insert de support auxiliaire (11) latéralement à l'intérieur de la structure de carcasse (2) elle-même.

25. Procédé selon la revendication 1, dans lequel la première couche (130) présente une épaisseur comprise entre environ 0,2 mm et environ 10 mm.

26. Procédé selon la revendication 25, dans lequel ladite épaisseur est comprise entre environ 2 mm et environ 6 mm.

27. Procédé selon la revendication 1, dans lequel lesdites première (125) et deuxième (126) parties longitudinales sont délimitées par une ligne d'interface (117a) formant un angle par rapport à un axe d'étendue principale (Z) du profil de section transversale dudit élément allongé continu (117), qui est compris entre environ 15° et environ 90°.

28. Procédé selon la revendication 27, dans lequel ledit angle est compris entre environ 40° et environ 50°.

29. Appareil pour fabriquer des pneumatiques pour roues de véhicule, comprenant :
- des dispositifs (101) conçus pour former une structure de carcasse (2) comprenant des éléments de renfort allongés incorporés dans une matrice élastomère ;
- des dispositifs (118, 133) pour associer des éléments structurels en matériau élastomère (8, 9, 10, 11) à ladite structure de carcasse (2) ;
- des dispositifs pour cuire le pneumatique (1),
dans lequel les dispositifs pour associer les éléments structurels en matériau élastomère à la structure de carcasse (2) comprennent au moins une unité (118) pour préparer des composants stratifiés, comprenant :
- des premiers dispositifs (120) d'alimentation en un premier matériau élastomère ;
- des deuxièmes dispositifs (121) d'alimentation en un deuxième matériau élastomère ;
- une filière d'extrusion (119) communiquant avec lesdits premier et deuxième dispositifs d'alimentation (120, 121) pour fournir un premier élément allongé continu (117) depuis un orifice de sortie (124), ledit premier élément allongé continu étant défini par une première partie longitudinale (125) et une deuxième partie longitudinale (126) disposées côte à côte et formées respectivement desdits premier et deuxième matériaux élastomères,
- des organes (109) pour poser ledit élément allongé continu (117) sur un support de formage (2, 104) de manière à former un composant stratifié (129) présentant une première couche (130) et une deuxième couche (131) consistant respectivement en lesdits premier et deuxième matériaux élastomères ;
**caractérisé en ce que** lors de l'action desdits organes de pose (109) l'élément allongé continu (117) est posé en spires (128) enroulées selon un chemin prédéfini, dans lequel des sections consécutives de la première partie longitudinale (125) de l'élément allongé continu (117) appartenant chacune à une des spires (128), sont disposées l'une contre l'autre pour former la première couche (130), et des sections consécutives de la deuxième partie longitudinale (126) appartenant chacune à une des spires (128) sont disposées l'une contre l'autre pour former la deuxième couche (131) superposée à la première couche (130).

30. Appareil selon la revendication 29, dans lequel l'orifice de sortie (124) présente une conformation sensiblement aplatie.

31. Appareil selon la revendication 30, dans lequel l'orifice de sortie (124) présente une dimension de plus grande largeur correspondant à au moins 1,5 fois une dimension de plus petite largeur du même orifice.

32. Appareil selon la revendication 30, dans lequel la filière d'extrusion (119) présente :
- un premier canal d'entrée (122) communiquant avec les premiers dispositifs d'alimentation (120) ; et
- un deuxième canal d'entrée (123) communiquant avec les deuxièmes dispositifs d'alimentation (121) ;
dans lequel les premier et deuxième canaux d'entrée (122, 123) convergent vers l'orifice de sortie (124) en des positions mutuellement alignées parallèlement à un axe d'étendue principal de l'orifice de sortie (124).

33. Appareil selon la revendication 29, comprenant en outre des dispositifs de modulation de la fourniture d'au moins un desdits premier et deuxième matériaux élastomères à la sortie de la filière (119), de manière à provoquer des variations de l'épaisseur d'une desdites première et deuxième couches (130, 131) par rapport à l'autre couche.

34. Appareil selon la revendication 29, comprenant en outre des dispositifs pour désactiver sélectivement la fourniture de l'un desdits premier et deuxième matériaux sortant de la filière (119) pour provoquer une interruption de l'extension des première ou deuxième couches correspondantes dans le composant stratifié (129).

35. Appareil selon la revendication 29, dans lequel lesdits premier dispositif d'alimentation (120) et deuxième dispositif d'alimentation (121) comprennent respectivement une première et une deuxième extrudeuses.

36. Appareil selon la revendication 29, dans lequel ladite unité (118) pour produire des composants stratifié comprend :
- des dispositifs d'entraînement en rotation (116) pour procurer au support de formage (2, 104) un mouvement rotatif de distribution circonférentielle autour d'un axe de rotation géométrique (X), de sorte que l'élément allongé continu (117) fourni par la filière d'extrusion (119) est distribué circonférentiellement sur le support de formage (2, 104) ;
- des dispositifs d'entraînement en translation (112, 113, 114, 115) pour réaliser des déplacements relatifs contrôlés pour une distribution transversale entre le support de formage (2, 104) et la filière d'extrusion (119), de manière à former lesdites spires (128).

37. Appareil selon la revendication 29, comprenant en outre une première unité auxiliaire (133) pour appliquer au moins une couche de couverture (132) en matériau élastomère sur ledit composant stratifié (129), la deuxième couche (131) du composant stratifié (129) étant interposée entre la première couche (130) et la couche de couverture (132).

38. Appareil selon la revendication 37, dans lequel la première unité auxiliaire (133) comprend :
- des dispositifs pour fournir un deuxième élément allongé continu ;
- des dispositifs pour poser ledit deuxième élément allongé continu sur ledit composant stratifié (129), au moyen de spires enroulées selon un chemin prédéterminé, de manière à former ladite couche de couverture (132).

39. Appareil selon la revendication 38, dans lequel le dispositif pour fournir le deuxième élément allongé continu comprend une troisième extrudeuse (134).

40. Appareil selon la revendication 37, dans lequel ladite première unité auxiliaire (133) comprend :
- des dispositifs pour mettre une bande en matériau élastomère d'une longueur correspondant à l'étendue du composant stratifié (129) ;
- des dispositifs pour enrouler la bande en matériau élastomère sur le composant stratifié (129) ;
- des dispositifs pour joindre mutuellement les extrémités opposées de la bande enroulée sur le composant stratifié (129).

41. Appareil selon la revendication 29, comprenant en outre une deuxième unité auxiliaire pour appliquer au moins une couche de base en matériau élastomère sur le support de formage (2, 104), préalablement au formage du composant stratifié (129).

42. Appareil selon la revendication 41, dans lequel la deuxième unité auxiliaire comprend :
- des dispositifs pour fournir un troisième élément allongé continu ;
- des dispositifs pour poser ledit troisième élément allongé continu sur le support de formage (2, 104), au moyen de spires enroulées selon un chemin prédéterminé, de manière à former ladite couche de base.

43. Appareil selon la revendication 42, dans lequel les dispositifs pour fournir le troisième élément allongé continu comprennent une quatrième extrudeuse.

44. Appareil selon la revendication 41, dans lequel ladite seconde unité auxiliaire comprend :
- des dispositifs pour mettre une bande en matériau élastomère d'une longueur correspondant à l'étendue du support de formage (2, 104) ;
- des dispositifs pour enrouler la bande en matériau élastomère sur le support de formage (2, 104) ;
- des dispositifs pour joindre mutuellement les extrémités opposées de la bande enroulée sur le support de formage (2, 104).

45. Appareil selon la revendication 29, dans lequel ladite au moins une unité (118) pour fabriquer des composants stratifiés est conçue pour faire des bandes de roulement (8) en une position radialement externe à la structure de carcasse (2).

46. Appareil selon la revendication 29, comprenant en outre des dispositifs (105, 107) pour fabriquer une structure de ceinture (7) et des dispositifs (108) pour associer ladite structure de ceinture (107) à la structure de carcasse (2) en un position radialement externe, dans lequel ladite au moins une unité (118) pour fabriquer des composants stratifiés est conçue pour faire une bande de roulement (8) en une position radialement externe à ladite structure de ceinture (7).

47. Appareil selon la revendication 29, dans lequel ladite au moins une unité (118) pour fabriquer des composants stratifiés est conçue pour faire des flancs (10) disposés latéralement contre la structure de carcasse.

48. Appareil selon la revendication 29, dans lequel ladite au moins une unité (118) pour fabriquer des composants stratifiés est conçue pour faire des inserts de support auxiliaires (11) pour être associés à la structure de carcasse (2).

49. Appareil selon la revendication 29, dans lequel la filière d'extrusion (119) est prévue avec :
- un premier canal d'entrée (122) communiquant avec les premiers dispositifs d'alimentation (120) ; et
- un deuxième canal d'entrée (123) communiquant avec les deuxièmes dispositifs d'alimentation (121) ;
dans lequel les premier et deuxième canaux d'entrée (122, 123) convergent vers l'orifice de sortie (124) ;
- lesdits premier (122) et deuxième (123) canaux d'entrée étant respectivement séparés en correspondance avec ladite filière (119) en une position distale par rapport audit orifice de sortie (124), par une cloison (127).
